(19) Europäisches Patentamt
European Patent Office
Office européen des brevets

(11) **EP 1 445 608 A1**

(12) **EUROPEAN PATENT APPLICATION**

(43) Date of publication:
**11.08.2004 Bulletin 2004/33**

(51) Int Cl.⁷: **G01N 27/407**, F01N 11/00, F02D 41/14, G01N 27/417

(21) Application number: **04075160.4**

(22) Date of filing: **19.01.2004**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(30) Priority: **30.01.2003 US 443831**
**24.09.2003 US 670440**

(71) Applicant: **Delphi Technologies, Inc.**
**Troy, MI 48007 (US)**

(72) Inventor: **Moore, Wayne Richard**
**Goodrich, MI 48438 (US)**

(74) Representative: **Denton, Michael John**
**Delphi European Headquarters,**
**64 avenue de la Plaine de France,**
**Paris Nord II,**
**BP 60059,**
**Tremblay-en-France**
**95972 Roissy Charles de Gaulle Cédex (FR)**

(54) **Gas sensor comprising a sampling tube, method of making and using that sensor**

(57) A sensor (200) including: an upper shell (102), an outer shield (108) disposed in physical communication with the upper shell (102), a sensing element (100) comprising a sensing electrode (12) and a reference electrode (14) disposed at a sensing end of the sensing element (100), wherein the sensing end is disposed in the outer shield (108), and a sampling tube (110) extending from the outer shield (108). The sampling tube (110) is configured to enable fluid communication between the sensing element (100) and an environment external to the outer shield (108). Also disclosed are a method of making that sensor and a method of using that sensor. As an additional embodiment the sensor can be used in an exhaust gas treatment device where the sampling tube is positioned in a substrate as a catalyst or a filter.

Fig.2.

**Description**

BACKGROUND OF THE INVENTION

Oxygen sensors are used in a variety of applications that require qualitative and quantitative analysis of gases. In automotive applications, the direct relationship between oxygen concentration in the exhaust gas and air to fuel ratio (A/F) of the fuel mixture supplied to the engine allows the oxygen sensor to provide oxygen concentration measurements for determination of optimum combustion conditions, maximization of fuel economy, and management of exhaust emissions.

One type of sensor uses an ionically conductive solid electrolyte between porous electrodes. For oxygen sensing, solid electrolyte sensors are used to measure oxygen activity differences between an unknown gas sample and a known gas sample. In the use of a sensor for automotive exhaust, the unknown gas is exhaust and the known gas, i.e., reference gas, is usually atmospheric air because the oxygen content in air is relatively constant and readily accessible. This type of sensor is based on an electrochemical galvanic cell operating in a potentiometric mode to detect the relative amounts of oxygen present in an automobile engine's exhaust. When opposite surfaces of this galvanic cell are exposed to different oxygen partial pressures, an electromotive force ("emf") is developed between the electrodes according to the Nernst equation.

With the Nernst principle, chemical energy is converted into electromotive force. A gas sensor based upon this principle includes an ionically conductive solid electrolyte material, a porous electrode with a porous protective overcoat exposed to exhaust gases ("exhaust gas electrode"), and a porous electrode exposed to a known gas' partial pressure ("reference electrode"). Sensors used in automotive applications may use a yttrium stabilized zirconia based electrochemical galvanic cell with porous platinum electrodes, operating in potentiometric mode, to detect the relative amounts of a particular gas, such as oxygen for example, that is present in an automobile engine's exhaust. Also, a sensor may have a ceramic heater to help maintain the sensor's ionic conductivity. When opposite surfaces of the galvanic cell are exposed to different oxygen partial pressures, an electromotive force is developed between the electrodes on the opposite surfaces of the zirconia wall, according to the Nernst equation:

$$E = \left( \frac{RT}{4F} \right) \ln \left( \frac{P_{O_2}^{ref}}{P_{O_2}} \right)$$

where:

E = electromotive force

R = universal gas constant
F = Faraday constant
T = absolute temperature of the gas
$P_{O_2}^{ref}$ = oxygen partial pressure of the reference gas
$P_{O_2}$ = oxygen partial pressure of the exhaust gas

Due to the large difference in oxygen partial pressure between fuel rich and fuel lean exhaust conditions, the electromotive force (emf) changes sharply at the stoichiometric point, giving rise to the characteristic switching behavior of these sensors. Consequently, these potentiometric oxygen sensors indicate qualitatively whether the engine is operating fuel-rich or fuel-lean, conditions without quantifying the actual air-to-fuel ratio of the exhaust mixture. Oxygen sensors measure the oxygen present in the exhaust to make the correct determination when the oxygen content (air) exactly equals the hydrocarbon content (fuel).

An oxygen sensor may be used to monitor the state of a catalytic converter, which may improve emission performance. This monitoring provides feedback to a control system as to the state of the Oxygen Storage Capacity (OSC) of the catalyst. Generally, an oxygen sensor is located at the outlet of the converter.

Therefore, what is needed in the art is an oxygen sensor that provides the function of effectively monitoring the catalytic converter and preferably the state of the catalytic converter.

SUMMARY OF THE INVENTION

One embodiment of a gas sensor comprising: exposing a sampling tube disposed within a substrate to a gas to be sampled, wherein the sampling tube extends from an outer shield of a sensor into a substrate, and wherein the outer shield is located outside the substrate, and wherein the sensor comprises an upper shell, an outer shield disposed in physical communication with the upper shell, a sensing element comprising a sensing electrode and a reference electrode disposed at a sensing end of the sensing element, wherein the sensing end is disposed in the outer shield, and the sampling tube extends from the outer shield; introducing the gas from the substrate into the sampling tube; passing the gas through the sampling tube; and exposing the sensing end to the gas, wherein the gas contacts the sensing end and then exits the sensor through the outer shield.

One embodiment of a method of making a sensor comprises disposing a sensing electrode and a reference electrode on opposite sides of and adjacent to an electrolyte to form a sensing element; encasing at least a portion of the sensing element in an outer shield, wherein a plenum is formed around the sensing element; and disposing a sampling tube at an end of outer shield, wherein the sampling tube is in fluid communication with an exhaust fluid.

One embodiment of a method of using a sensor comprises exposing a sampling tube disposed within a substrate to a gas to be sampled, wherein the sampling tube extends from an outer shield of a sensor into a substrate, and wherein the outer shield is located outside the substrate, and wherein the sensor comprises an upper shell, an outer shield disposed in physical communication with the upper shell, a sensing element comprising a sensing electrode and a reference electrode disposed at a sensing end of the sensing element, wherein the sensing end is disposed in the outer shield, and the sampling tube extends from the outer shield; introducing the gas from the substrate into the sampling tube; passing the gas through the sampling tube; and exposing the sensing end to the gas, wherein the gas contacts the sensing end and then exits the sensor through the outer shield.

One embodiment of an exhaust treatment device comprises: a substrate disposed within a housing. A sensor extends through the housing, wherein the sensor comprises an outer shield disposed in physical communication with an upper shell, a sensing element comprising an electrolyte, a sensing electrode, and a reference electrode disposed at a sensing end of the sensing element, and wherein the sensing end is disposed in the outer shield, and a sampling tube extending from the outer shield into the substrate. The sampling tube is configured to enable fluid communication between the sensing element and a point within the substrate.

The above-described and other features will be appreciated and understood by those skilled in the art from the following detailed description, drawings, and appended claims.

BRIEF DESCRIPTION OF THE DRAWINGS

Referring now to the figures, which are exemplary embodiments, and wherein the like elements are numbered alike:

Figure 1 is an exploded view of an exemplary embodiment of a planar gas sensor element prior to sintering.
Figure 2 is a cross-sectional view of an exemplary embodiment of a gas sensor.
Figure 3 is a cross-sectional view of an exhaust emission control catalytic system having an oxygen sensor.
Figure 4 is a graph of resonate frequency of a sampling tube at various length and diameters.
Figure 5 is a graph of the performance of an internal catalyst oxygen sensor.
Figure 6 is a graph of the performance of an internal catalyst oxygen sensor when the sensor is used for feedback control.

DETAILED DESCRIPTION OF THE DRAWINGS

Although described in connection with an oxygen sensor, it is to be understood that the sensor could be a nitrogen oxide sensor, hydrogen sensor, particulate sensor, hydrocarbon sensor, or the like. Additionally, the design of the sensor element is not limited. The sensor element may be single or multi-celled. It is understood by those skilled in the art that any shape may be used for gas sensor element, including conical, tubular, rectangular, and flat, and the like, and the various components, therefore, will have complementary shapes, such as in plan views, circular, oval, quadrilateral, rectangular, or polygonal, among others. Furthermore, while oxygen is the reference gas used in the description disclosed herein, it should be understood that other gases could be employed as a reference gas.

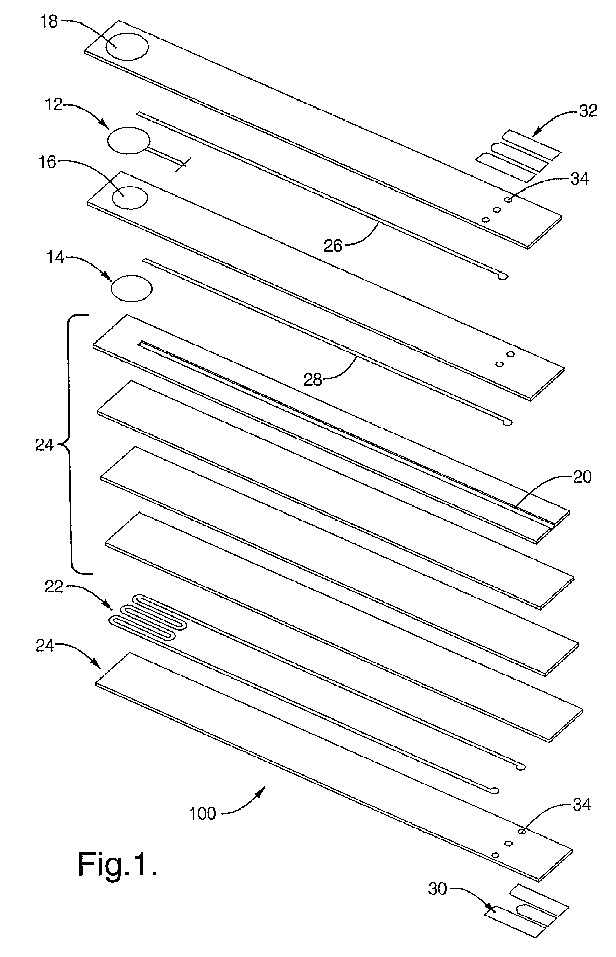

Referring now to Figure 1, an exemplary planar gas sensor element 100 is illustrated. A sensing (i.e., first, exhaust gas or outer) electrode 12 and a reference gas (i.e., second or inner) electrode 14 are disposed on opposite sides of, and adjacent to, an electrolyte layer 16 creating an electrochemical cell (12/16/14). On the side of sensing electrode 12, opposite solid electrolyte 16, is a protective layer 18 that enables fluid communication between sensing electrode 12 and the gas to be sensed. Disposed on the side of reference electrode 14, opposite solid electrolyte 16, may be an optional reference gas channel 20, which is in fluid communication with reference electrode 14 and optionally with the ambient atmosphere and/or a reference gas. Disposed on a side of reference gas channel 20, opposite reference electrode 14 may optionally be a heater 22 for maintaining sensor element 100 at a desired operating temperature. Disposed between reference gas channel 20 and heater 22, as well as on a side of heater 22 opposite reference gas channel 20, may be one or more insulating/support layers generally designated 24.

Meanwhile, disposed across electrolyte 16, in electrical communication with sensing electrode 12 and reference electrode 14, respectively, are electrical leads 26, 28. The outer sides of sensor element 100, at the end opposite electrodes 12, 14 and electrolyte 16, are contacts 30, 32, which electrically connect to leads 26, 28 and heater 22 through vias 34. Additionally, other sensor components may be employed such as a lead gettering layer, ground plane, and the like.

Electrolyte 16, which may be a solid electrolyte, may be formed of a material that is capable of permitting the electrochemical transfer of oxygen ions while inhibiting the passage of exhaust gases. Possible electrolyte materials include zirconium oxide (zirconia), cerium oxide (ceria), calcium oxide, yttrium oxide (yttria), lanthanum oxide, magnesium oxide, and the like, as well as combinations comprising at least one of the foregoing electrolyte materials, such as yttria doped zirconia, alumina and yttria doped zirconia, and the like.

Disposed adjacent to electrolyte 16 are electrodes 12, 14. Sensing electrode 12, which is exposed to the exhaust gas during operation, preferably has a porosity sufficient to permit diffusion of oxygen molecules therethrough. Similarly, reference electrode 14, which may be exposed to a reference gas such as oxygen, air, or the like, during operation, preferably has a porosity sufficient to permit diffusion to oxygen molecules therethrough. These electrodes 12, 14 comprise a material capable of ionizing oxygen, including, but not limited to metals such as, platinum, palladium, gold, osmium, rhodium, iridium and ruthenium; and metal oxides, such as zirconia, yttria, ceria, calcium oxide, aluminum oxide (alumina), and the like; as well as combinations comprising at least one of the foregoing metals. Other additives such as zirconia may be added to impart beneficial properties such as inhibiting sintering of the platinum to maintain porosity.

Protective layer 18 disposed on the side of the sensing electrode 12, opposite solid electrolyte 16, is designed to protect the electrode 12 from contaminants, provide structural integrity to the sensor element 100 and the electrode 12, and to allow the electrodes 12 to sense the particular gas without inhibiting the performance of the sensor element 100. Possible materials for protective layer 18, include alumina, (such as, delta alumina, gamma alumina, theta alumina, and the like, and combinations comprising at least one of the foregoing aluminas), as well as other dielectric materials.

Heater 22 may be employed to maintain the sensor element at the desired operating temperature. Heater 22 may be a heater capable of maintaining the end of the sensor adjacent the electrodes at a sufficient temperature to facilitate the various electrochemical reactions therein. For example, an operating temperature of about 650 degrees Celsius to about 800 degrees Celsius may be employed, with an operating temperature of about 700 degrees Celsius to about 750 degrees Celsius preferred. Suitable materials for heater 22 include, but are not limited to, platinum, aluminum, palladium, and the like, as well as mixtures, oxides, and alloys comprising at least one of the foregoing materials. These materials may be screen printed or otherwise disposed onto a substrate (e.g., insulating layers 24), to a thickness sufficient to enable the desired heating of the electrodes. For example, the materials may be printed to a thickness of about 5 micrometers to about 50 micrometers, with about 10 micrometers to about 40 micrometers more preferred.

Insulating/support layers 24 provide structural integrity (e.g., protect various portions of the sensor element from abrasion and/or vibration, and the like, and provide physical strength to the sensor), and physically separate and electrically isolate various components. The insulating layer(s) may each be up to about 200 micrometers thick or so, with a thickness of about 50 micrometers to about 200 micrometers preferred. The insulating layers 24 may comprise a dielectric material such as alumina (e.g, delta alumina, gamma alumina, theta alumina, and combinations comprising at least one of the foregoing aluminas), and the like.

Leads (26, 28), contacts (30, 32), and vias 34 comprise an electrically conductive metal such as platinum, palladium, ruthenium, and the like, and other metals, metal oxides, and alloys and mixtures comprising at least one of the foregoing metals.

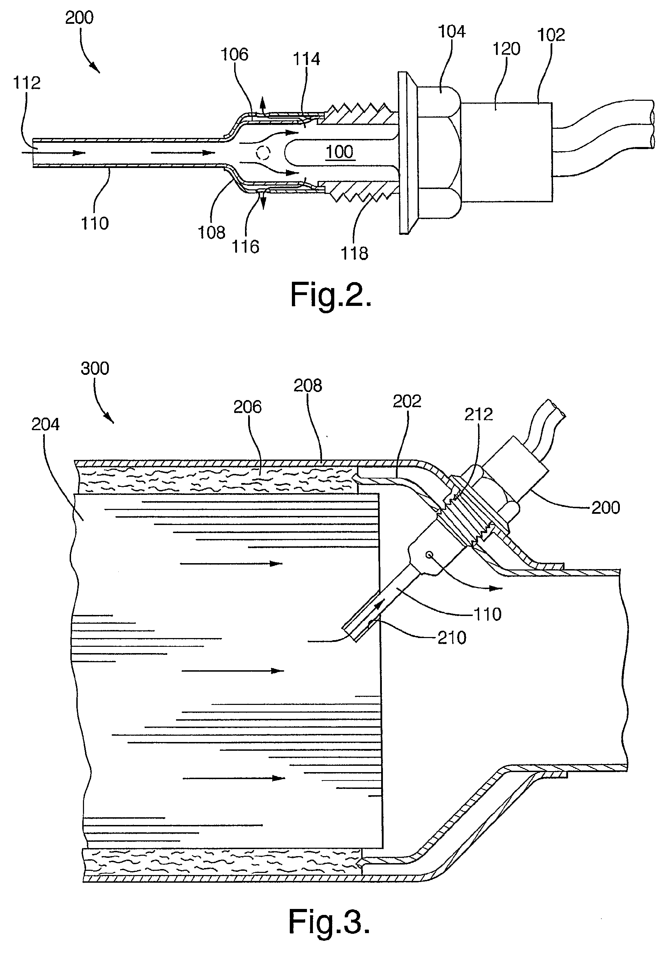

Referring now to Figure 2, a gas sensor generally designated 200 is shown. Gas sensor 200 comprises gas sensor element 100. Gas sensor element 100 is embedded in an insulator 120, which is covered by an upper shell 102. As will be described in much greater detail, an upper shell 102 is physical communication with a lower shell 104, which comprises an outer shield 108 having a plurality of outer shield holes 116. An inner shield 106 has a plurality of passages 114, which allows fluid to enter a space between inner shield 106 and outer shield 108. Outer shield holes 116 allow fluid in the space between inner shield 106 and outer shield 108 to exit oxygen sensor 200. A sampling tube 110 having an inlet 112 extends from the outer shield 108, preferably from an end portion of outer shield 108 disposed opposite the connection of outer shield 108 to lower Shell 104. The sampling tube 110 opens into a plenum surrounding sensing element 110. More particularly, sampling tube 110 extends from sampling tube inlet 112 to outer shield 108 and inner shield 106, thereby enabling fluid communication between sampling tube inlet 112 and the sensing element 100. Arrows are shown to illustrate the general fluid flow direction within oxygen sensor 200.

Upper shell 102 is in physical communication with lower shell 104, and may be attached to lower shell 104 by any joining method, for example, welding, crimping, and the like. The choice of material for the upper shell 102 and lower shell 104 depends upon the type of exhaust fluid, the maximum temperature reached by the substrate(s), the maximum temperature of the exhaust fluid stream, and the like. Suitable materials for the shell (s) may comprise any material that is capable of resisting under-car salt, temperature, and corrosion. For example, ferrous materials are employed such as ferritic stainless steels. Ferritic stainless steels may include stainless steels such as, e.g., SS-409, SS-316, and the like. Additionally, a nickel, chromium, iron alloy may be employed. For example, those alloys manufactured under the trademark INCONEL®, commercially available from Inco Alloys International, Inc.

Inner shield 106 disposed in outer shield 108 allows an exhaust fluid a sufficient time to be physical communication with sensing element 100. Inner shield 106 comprises a plurality of exhaust passages 114. The plurality of exhaust passages 114 may be disposed anywhere in inner shield 106 to allow exhaust fluid to exit the plenum surrounding sensing element 100. Preferably, the plurality of exhaust fluid passages 114 is located in a position to allow the exhaust fluid a sufficient time to be in physical communication with sensing element 100. Additionally, the plurality of exhaust passages 114 may be any size or shape sufficient to allow the passage of exhaust fluid.

In other exemplary embodiments, inner shield 106 may be have a different design. For example, the inner shield 106 can have a length, less than an outer shield 108 length, and sufficient to provide an exit of exhaust fluid from the plenum surrounding sensing element 100, while allowing exhaust fluid sufficient time to be in physical communication with sensing element 100. An annular opening is formed from the differences in length between inner shield 106 and outer shield 108 at an end opposite the end forming the connection of inner shield 106 and outer shield 108. Preferably, the annular opening is located at an end opposite the end of outer shield 108 coupled to sampling tube 110. This length can be used independently or in conjunction with one or more of the exhaust fluid passages 114.

An optional inner shield 106 may be attached to outer shield 108 by any joining method, for example, welding, crimping, and the like. In other words, at least a portion of inner shield 106 is in physical communication with outer shield 108. The choice of material for inner shield 106 and lower shell 108 depends upon the type of exhaust fluid, the maximum temperature reached by the substrate(s), the maximum temperature of the exhaust fluid stream, and the like. Suitable materials for the shields (s) may comprise any material that is capable of resisting under-car salt, temperature, and corrosion. For example, ferrous materials are employed such as ferritic stainless steels. Ferritic stainless steels may include stainless steels such as, e.g., SS-409, SS-316, and the like. Additionally, a nickel, chromium, iron alloy may be employed, e.g., INCONEL®.

Outer shield 108 is in physical communication with inner shield 106 at least at one end, and is disposed concentrically around inner shield 106 forming a space between the inner shield 106 and 108, wherein the space is in fluid communication with exhaust fluid. Exhaust fluid may enter the space from the plurality of passages 114 of inner shield 106, the annular opening formed by varying the length of the inner shield, and the like depending on the design of the inner shield. The exhaust fluid is allowed to exit the space between outer shield 108 and inner shield 106 through a plurality of outer shield holes 116. The plurality of outer shield holes 116 preferably may have any size and shape, and be disposed anywhere throughout outer shield 108 capable of allowing exhaust fluid to exit the space between the outer shield 108 and the inner shield 106. Although the oxygen sensor 200 preferably has an inner shield (e.g., 106), in various other embodiments, the oxygen sensor 200 may be without the inner shield. In such embodiments, the plurality of outer shield holes 116 are positioned to allow an exhaust fluid sufficient time to be in physical communication with sensor element 100.

Figure 3 illustrates an exhaust emission control system (e.g., a catalytic converter system, evaporative emissions devices, scrubbing devices (e.g., hydrocarbon, sulfur, and the like), particulate filters/traps, adsorbers/absorbers, non-thermal plasma reactors, and the like, as well as combinations comprising at least one of the foregoing devices), generally designated 300. In this embodiment, a catalytic element 204 is wrapped in mat support material 206 and encased within a shell 208, which is attached to an end cone 202. Oxygen sensor 200 is mounted in end cone 202 with sampling tube 110 penetrating into a rear (outlet side) region of catalytic element 204. An arrow is shown to schematically illustrate the general fluid flow direction in the system 300. During installation a catalyst element hole 210 is provided to accept the sampling tube 110 from oxygen sensor 200. Catalyst element hole 210 is aligned with a relating oxygen sensor-mounting hole 212 in which mounting boss 118 (See Figure 2) engages (e.g., threaded into hole 212) to lock/hold oxygen sensor 200 in place within end cone 202.

Catalytic element 204 comprises a substrate having a catalyst material disposed on and/or throughout the substrate. The substrate(s) may comprise any material designed for use in a spark ignition or diesel engine environment and having the following characteristics: (1) capable of operating at temperatures up to about 600°C, and up to about 1,000°C for some applications, depending upon the device's location within the exhaust system (manifold mounted, close coupled, or underfloor) and the type of system (e.g., gasoline or diesel); (2) capable of withstanding exposure to hydrocarbons, nitrogen oxides, carbon monoxide, particulate matter (e.g., soot and the like), carbon dioxide, and/or sulfur; and (3) having sufficient surface area and structural integrity to support a catalyst. Some possible materials include cordierite, silicon carbide, metal, metal oxides (e.g., alumina, and the like), glasses, and the like, and mixtures comprising at least one of the foregoing materials. Some ceramic materials include "Honey Ceram", commercially available from NGK-Locke, Inc, Southfield, Michigan, and "Celcor", commercially available from Coming, Inc., Coming, New York. These materials may be in the form of foils, perform, mat, fibrous material, monoliths (e.g., a honeycomb structure, and the like), other porous structures (e.g., porous glasses, sponges), foams, pellets, particles, molecular sieves, and the like (depending upon the particular device), and combinations comprising at least one of the foregoing materials and forms, e.g., metallic foils, open pore alumina sponges, and porous ultra-low expansion glasses. Furthermore, these substrates may be coated with oxides and/or hexaaluminates, such as stainless steel foil coated with a hexaaluminate scale.

Although the substrate may have any size or geometry, the size and geometry are preferably chosen to optimize surface area in the given exhaust emission control device design parameters. For example, the substrate has a honeycomb geometry, with the combs through-channel having any multi-sided or rounded shape, with substantially square, triangular, pentagonal, hexagonal, heptagonal, or octagonal or similar geometries preferred due to ease of manufacturing and increased surface area.

Depending upon the exhaust emission control device, disposed on and/or throughout the substrate may be a catalyst capable of reducing the concentration of at least one component in the exhaust fluid. The catalyst may comprise one or more catalyst materials that are wash coated, imbibed, impregnated, physisorbed, chemisorbed, precipitated, or otherwise applied to the substrate. Possible catalyst materials include metals, such as platinum, palladium, rhodium, iridium, osmium, ruthenium, tantalum, zirconium, yttrium, cerium, nickel, manganese, copper, and the like, as well as oxides, alloys, and combinations comprising at least one of the foregoing catalyst materials, and other catalysts.

The catalyst material may be combined with additional materials or sequentially disposed on the substrate with these additional materials. The additional materials may comprise oxides (e.g., alumina, zirconia, titania, and the like), aluminides, hexaaluminates, and the like, and combinations comprising at least one of the foregoing. Where an aluminide is used, preferably the aluminide comprises an aluminum in combination with at least one additional metal, such as, nickel, iron, titanium, copper, barium, strontium, calcium, silver, gold, platinum, and oxides, alloys, and combinations comprising at least one of the foregoing, with nickel, iron, titanium, and oxides, alloys, and combinations comprising at least one of the foregoing particularly preferred. Where a hexaaluminate is employed, the hexaaluminate preferably comprises a crystalline structure of aluminum and oxygen.

The additional materials may further comprise stabilizing agents, such as, Group II metals, rare earth metals, Group VIII metals, and the like, as well as, oxides, alloys, and combinations comprising at least one of the foregoing. Preferred stabilizing agents include barium, platinum, palladium, osmium, strontium, lanthanum, ruthenium, iridium, praseodymium, rhodium, gold, manganese, cobalt, and the like, as well as, oxides, alloys, and combinations comprising at least one of the foregoing, with barium, lanthanum, and combinations comprising at least one of the foregoing particularly preferred.

Located between the substrate and a shell (e.g., 206) may be a mat support material (e.g., 208) (also referred to as a retention material) that insulates the shell from both the exhaust fluid temperatures and the exothermic catalytic reaction occurring within the catalytic element (e.g. 204). The mat support material, which enhances the structural integrity of the substrate by applying compressive radial forces about it, reducing its axial movement and retaining it in place, is concentrically disposed around the substrate to form a mat support material material/substrate subassembly.

The retention material, which may be in the form of a mat, particulates, or the like, may either be an intumescent material (e.g., a material that comprises vermiculite component, i.e., a component that expands upon the application of heat), a non-intumescent material, or a combination thereof. These materials may comprise ceramic materials (e.g., ceramic fibers) and other materials such as organic and inorganic binders and the like, or combinations comprising at least one of the foregoing materials. Non-intumescent materials include materials such as those sold under the trademarks "NEXTEL" and "INTERAM 1101HT" by the "3M" Company, Minneapolis, Minnesota, or those sold under the trademark, "FIBERFRAX" and "CC-MAX" by the Unifrax Co., Niagara Falls, New York, and the like. Intumescent materials include materials sold under the trademark "INTERAM" by the "3M" Company, Minneapolis, Minnesota, as well as those intumescents which are also sold under the aforementioned "FIBERFRAX" trademark, as well as combinations thereof and others.

The retention material/substrate subassembly may be concentrically disposed within a shell or housing (e.g. 206). The choice of material for the shell depends upon the type of exhaust gas, the maximum temperature reached by the substrate, the maximum temperature of the exhaust gas stream, and the like. Suitable materials for the shell can comprise any material that is capable of resisting under-car salt, temperature, and corrosion. For example, ferrous materials are employed such as ferritic stainless steels. Ferritic stainless steels can include stainless steels such as, e.g., the 400 - Series such as SS-409, SS-439, and SS-441, with grade SS-409 generally preferred.

Also similar materials as the housing, end cone(s), end plate(s), exhaust manifold cover(s), and the like, may be concentrically fitted about the one or both ends and secured to the housing to provide a gas tight seal. These components may be formed separately (e.g., molded or the like), or may be formed integrally with the housing using a methods such as, e.g., a spin forming, or the like.

Oxygen sensor 200, illustrated in Figures 2-3, allows for internal catalyst monitoring from a remote location, i.e., oxygen sensor 200 may be mounted in an end cone (e.g., 202) while monitoring the internal state of a catalyst. Nevertheless, in some cases, oxygen sensor 200 may be located in between bricks (substrates) in a catalytic converter to monitor a portion of the catalyst volume. This partial volume monitoring provides information about the Oxygen Storage Capacity (OSC) state of the catalytic converter prior to an emission break-through, which is not the case when a rear oxygen sensor is used. However, the location of the mid-brick sensor may be limited to between catalyst bricks that are generally separated by a gap. Because of packaging or clearance problems, it may not always possible to use the mid-brick location. However, sampling tube 110 allows for internal catalyst monitoring from a remote location.

Additionally, various designs of sampling tube 110 may be recognized. The exemplary embodiment shown in Figure 2 shows sampling tube 110 disposed centrally at an end of outer shield 108. In various other embodiments, sampling tube 110 may be disposed at an angle to a surface of outer shield 108 such that sampling tube 110 is in fluid communication with a plenum surrounding sensor element 100. Additionally, sampling tube 110 may be comprised of at least two tubular sections joined at an angle to each other, wherein at least on tubular section is attached to outer shield 108 at the end opposite the end joining the at least two tubular sections. Furthermore, sampling tube 110 may be an integral part of the outer shield 108. In other words, sampling tube 110 may be a separate component coupled to outer shield 108 by a joining method, for example, welding or sampling tube 110 may be part of outer shield 108. In an exemplary embodiment, sampling tube 110 is an integral part of outer shield 108.

In designing sampling tube 110, the intrusiveness of the tube into catalytic element 204 and the delay time in receiving the exhaust fluid at sensor element 100 are examples of variables to be considered. Generally, all else being equal, a reduction in diameter of sampling tube 110 relates to a smaller volume of catalytic element 204 that is removed during installation. Since catalyst material is disposed on/ throughout the substrate that comprises catalytic element 204, a smaller volume of catalytic element removed further relates to a smaller volume of catalyst material being removed. Similarly, an increased diameter of sampling tube 110 relates to a shorter delay time in receiving the exhaust fluid at sensor element 100 and increased structural stability of the sampling tube 110, but is more intrusive to catalyst element 204, i.e., a greater volume of catalyst is removed compared to a smaller diameter of sampling tube 110. The length of sampling tube 110 may vary with the installation location of oxygen sensor 200. In other words, the farther away the oxygen sensor is installed relative to catalytic element 204, the longer the length of the sampling tube 110 generally may be. As such, in selecting a length and diameter, the resonate frequency of sampling tube 110 is also considered (See Figure 3). Moreover, it is noted that the delay time, i.e., the time for exhaust fluid to travel the length of sampling tube 110 and reach sensing element, is minimal, i.e., does not vary substantially with varying lengths. For example, during idle (low flow) the delay time is greatest compared to cruise conditions. At idle, the delay time may be less than about 100 milliseconds (ms), with a delay time of less than about 40 ms in some embodiments. At cruise conditions, the delay time may be less than 20 ms at cruise, with a delay time of less than about 10 ms in some embodiments.

In an exemplary embodiment, sampling tube 110 has an inside diameter (ID) sufficient to provide structural stability to sampling tube 110, while being as least intrusive to catalyst element 204 as possible. For example, sampling tube has an inside diameter of about 2 millimeters (mm) to about 8 mm, with an inside diameter of about 4 mm to about 5 mm more preferred. Moreover, the sampling tube has a sufficient thickness to provide structural stability. As such, sampling tube 110 has an outside diameter (OD) of about 2.5 mm to about 8.5 mm, with an outside diameter of about 4.5 mm to about 5.5 mm more preferred. Additionally, sampling tube has a length sufficient to reach from oxygen sensor 200 to within catalyst substrate 204. For example, sampling tube 110 has a length from about 20 mm to about 150 mm, with a length of about 50 mm to 100 mm more preferred.

Additionally, the choice of material for sampling tube 110 depends upon the type of exhaust fluid, the maximum temperature of the exhaust fluid stream, and the like. Suitable materials for the shield(s) may comprise any material that is capable of resisting undercar salt, temperature, and corrosion. For example, ferrous materials can be employed, such as ferritic stainless steels, as well as nickel, chromium, iron alloys, and other materials.

In installing oxygen sensor 200, a catalyst element hole 210 is provided to receive sampling tube 110. While catalyst element hole 210 may have any size and shape, catalyst element hole 210 preferably has a size and shape substantially equal to the dimensions of sampling tube 110. For example in an exemplary embodiment, catalyst element hole 210 has a diameter of about 2.5 mm to about 8.5 mm, with a diameter of about 4.5 mm to about 5.5 mm more preferred; and a length from about 20 mm to about 150 mm, with a length of about 50 mm to 100 mm more preferred. Catalyst element hole 210 is aligned with mounting hole 212. Sampling tube 110 is inserted through mounting hole 212 into catalyst element hole 210. Oxygen sensor 200 is engaged (locked in place) in mounting hole 212 by mounting boss 212.

Oxygen sensor 200 may be mounted in end cone 202, as illustrated in Figure 3. End cone 202 may be packaged as part of the converter shell 206, or as a separate component, which may be attached to converter shell 206 by, for example, welding, crimping, and the like. Oxygen sensor 200 provides a flexible means of monitoring the state of the catalyst. In other words, oxygen sensor 200 may be designed to fit a variety of different packaging designs. For example, in an exemplary embodiment, oxygen sensor 200 may be disposed in end cone 202 at a distance of less than about 2 inches (about 5.1 centimeters) from catalytic converter element 204, within this range about less than about 0.5 inches (about 1.3 centimeters) may also be employed. As such, oxygen sensor 200 may be used in a variety of end cone geometries.

During operation, exhaust fluid enters converter element 204 and exits at a rear end (outlet side) of catalytic element 204 into an outlet defined by end-cone 202. An alternate fluid pathway is defined by fluid flow into sampling tube 110. A pressure gradient in catalyst element 204 induces a portion of exhaust fluid into sampling tube 110. Exhaust fluid enters sampling tube 110 via sample tube inlet 112, travels the length of sampling tube 110, and empties into a plenum surrounding sensor element 100 and formed by inner shield 106. The plenum is located at the outlet of the converter element 204 in a lower pressure region than inlet 112 of sampling tube 110. The fluid flow exits the plenum via passages 114 in inner shield 106 located substantially at an end farthest away from sampling tube 110, which allows the exhaust fluid time to be in physical communication with sensor element 100. The exhaust flow eventually enters passages 114, which channel the exhaust fluid into a space between inner shield 106 and outer shield 108, where it exits oxygen sensor 200 into an outlet space defined by end cone 202 outside converter element 204.

EXAMPLES

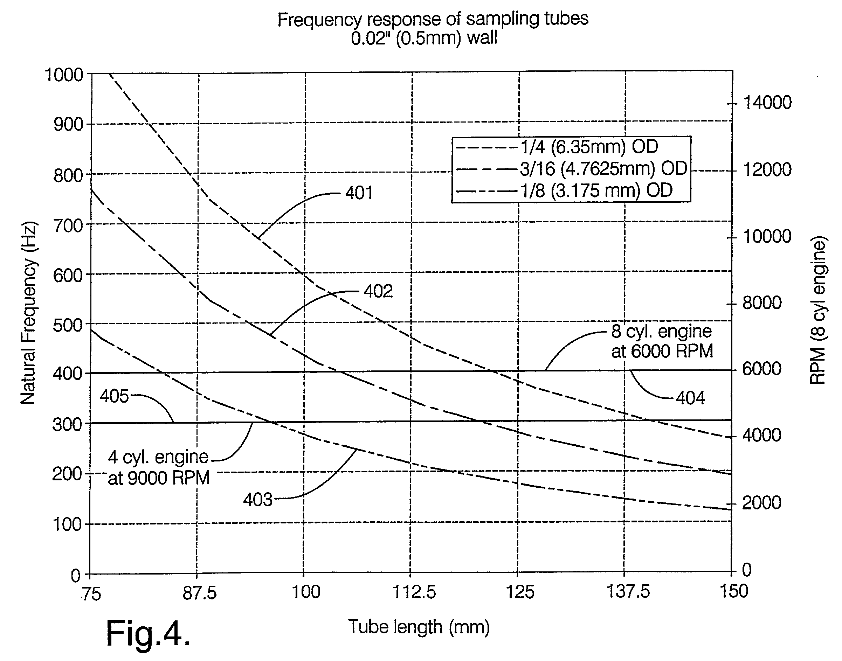

Turning now to Figure 4, a graph of resonate frequency of sampling tubes at various length and diameters are shown. Lines 404 and 405 respectively show that a 4 cylinder engine operating at 9,000 revolutions per minute (rpm) has a natural frequency of 300 hertz (Hz) and a 8 cylinder engine operating at 6,000 rpm has a natural frequency of 400 Hz. In this example, three sampling tubes were prepared and their natural frequencies were calculated as a function of tube length. Curve 401 represents a sampling tube having an outside diameter of 0.25 inches (6.35 mm) with a wall thickness of 0.02 inches (0.55 mm); curve 402 represents a sampling tube having an outside diameter of 0.188 inches (4.762 mm) with a wall thickness of 0.02 inches (0.55 mm); and curve 403 represents a sampling tube having an outside diameter of 0.125 inches (3.175 mm) with a wall thickness of 0.02 inches (0.55 mm).

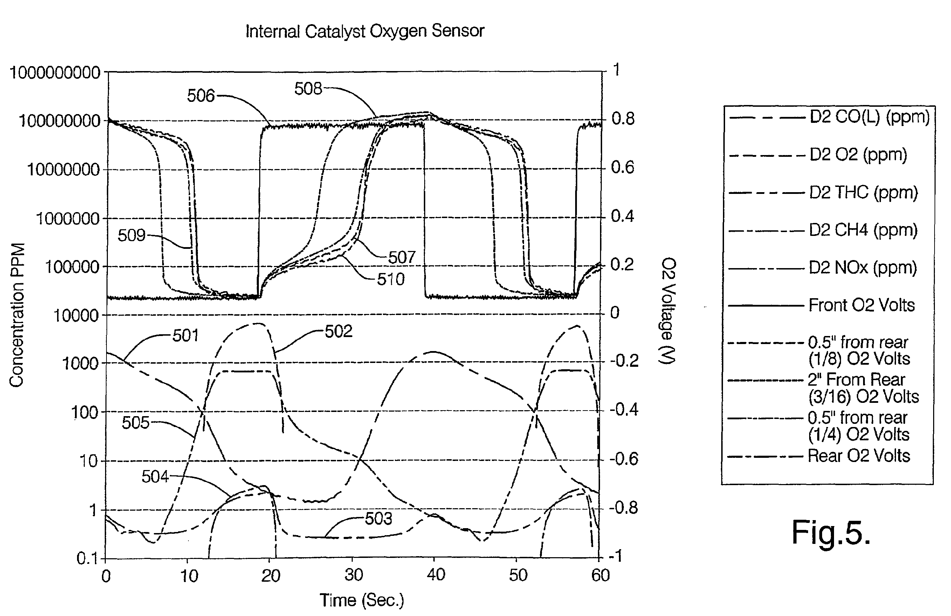

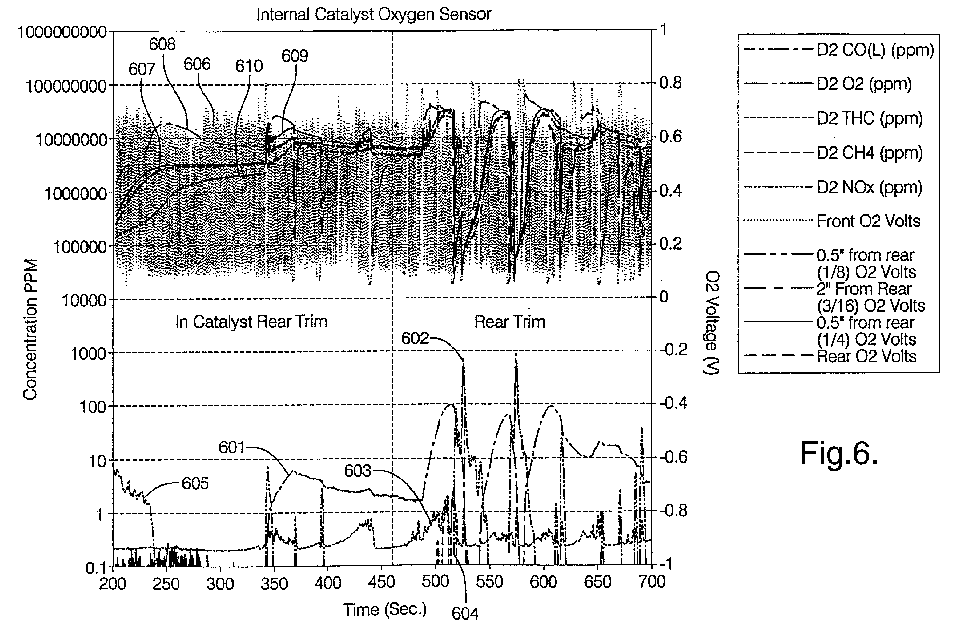

Figures 5-6 show a comparison between the performances of an internal catalyst oxygen sensor at varying concentrations. More particularly, Figure 5 shows a procedure similar to an Oxygen Storage Capacity (OSC) test used for catalyst diagnostics, and Figure 6 shows the difference in the emission control performance and sensor response when the rear or internal sensor is used for feedback control.

For example, Figures 5-6 illustrate an internal catalyst sensor comprising a sampling tube having an outside diameter of 0.125 inches (3.175 mm) located 0.5 inches (12.7 mm) from the rear face of the catalyst represented by line 507 and 607 respectively; and an internal catalyst sensor comprising a sampling tube having an outside diameter of 0.25 inches (6.175 mm) located 0.5 inches (12.7 mm) from the rear face of the catalyst represented by line 509 and 609 respectively. Figures 5-6 illustrate that an oxygen sensor comprising a sampling tube having a 0.25 inches (6.175 mm) outside diameter and a sampling tube having an outside diameter of 0.125 inches (3.175 mm), respectively, respond substantially alike. Without being bound by theory, these finding indicate that exhaust fluid travel time down the length of the sampling tube is minimal. As such, varying diameters does not appear to have a substantial impact on the time an exhaust fluid reaches a sensing element.

Lines 508 and 608 of Figures 5 and 6 respectively, represents an internal catalyst sensor comprising a sampling tube having an outside diameter of 0.188 inches (4.762 mm) located 2 inches (50.8 mm) from the rear of a catalyst, showed an improvement, i.e., a faster time response, compared to lines 507 and 607, and 509 and 609 or sensors located at the rear or outlet location represented by line 510 or 610 of Figures 5-6 respectively, wherein a line labeled in the 500s illustrates a line from Figure 5 and a line labeled in the 600s illustrates a line from Figure 6.

Generally, the internal sensor represented for example by line 508 and 608 provided earlier feedback resulting in better fuel control and reduced exhaust emissions compared to the rear or outlet sensor represented by line 510 and 610. Moreover, measurements of exhaust concentration at the catalyst outlet showed the penalty incurred by the delay in feedback.

Advantageously, a gas sensor comprising a sampling tube allows partial catalyst monitoring while providing for flexibility in packaging. In other words, remote sampling of gas can be attained using the sampling tube such that merely the sampling tube extends into the gas to be sensed. Monitoring the state of the catalyst allows for faster feed back than oxygen sensors located outside the catalytic converter. As such, lower emissions may be obtained to comply with the increasing environmental regulations. Moreover, the sensor provides information prior to emission breakthrough. By providing information prior to emission break through, the emission breakthrough may be prevented. Additionally, the sensor provides benefits for improved fuel control and diagnostics and has reduced sensitivity to mat organics, which covers catalytic element. This sensor design can be used with various sensor types and in various exhaust treatment systems. For example, an exhaust treatment device can comprise a substrate disposed within a housing. The sensor extends through the housing (at any desired point, e.g., through the endplate, end-cone, or through a side of the shell) such that the sampling tube extending from the outer shield into the substrate, i.e., the sampling tube extends into the substrate, but the remainder of the sensor does not extend into the substrate. This sampling tube enables fluid communication between the sensing element and a point within the substrate. The substrate can be any type of substrate employed in treatment devices, e.g., filters (e.g., particulate filters), catalyst supports comprising catalyst, absorber supports comprising absorbent materials, and adsorber supports comprising adsorbent materials (e.g., SOx adsorbers, NOx adsorbers, and the like).

While the invention has been described with reference to an exemplary embodiment, it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment disclosed as the best mode contemplated for carrying out this invention, but that the invention will include all embodiments falling within the scope of the appended claims.

**Claims**

1. A sensor (200) comprising:

   an upper shell (102);
   an outer shield (108) disposed in physical communication with the upper shell (102);
   a sensing element (100) comprising a sensing electrode (12) and a reference electrode (14) disposed at a sensing end of the sensing element, wherein the sensing end is disposed in the outer shield (108); and
   a sampling tube (110) extending from the outer shield (108), wherein the sampling tube (110) is configured to enable fluid communication between the sensing element (100) and an environment external to the outer shield (108).

2. The sensor of Claim 1, further comprising an inner shield (106) forming a plenum around the sensing end, wherein the inner shield (106) allows fluid communication between the sampling tube (110) and the sensing end and between the plenum and the outer shield (108).

3. The sensor of Claim 2, wherein the inner shield (106) has a length less than an outer shield (108) length such that an opening is formed by a space between the inner shield (106) and the outer shield (108) at an end of the inner shield (106) proximate the upper shell (102).

4. The sensor of Claim 1, wherein the inner shield (106) has a plurality of passages (114) allowing exhaust fluid to enter a space between the inner shield (106) and the outer shield (108), and wherein the outer shield (108) has a plurality of holes (116) allowing the exhaust fluid in the space between inner shield (106) and outer shield (108) to exit the sensor (200).

5. The sensor of Claim 1, wherein the sampling tube (110) and the inner shield (106) are a single, integral part.

6. The sensor of Claim 1, wherein the sampling tube (110) has a diameter of about 2 mm to about 8 mm.

7. The sensor of Claim 6, wherein the sampling tube (110) has a diameter of about 4 mm to about 5 mm.

8. The sensor of Claim 1, wherein the sampling tube (110) has a length of about 20 mm to about 150 mm.

9. The sensor of Claim 8, wherein the sampling tube (110) has a diameter of about 50 mm to about 100 mm.

10. The sensor of Claim 1, wherein the sampling tube (110) extends from the outer shield (108) from an end of the outer shield (108) opposite the upper shell (102).

11. A method of making a sensor (200), the method comprising:

    encasing a sensing end of a sensing element (100) in an outer shield (108), wherein a plenum is formed around the sensing end, wherein the sensing element (100) comprises a sensing electrode (12) and a reference electrode (14) disposed at a sensing end of the sensing element (100); and
    disposing a sampling tube (110) at an end of outer shield (108), wherein the sampling tube (110) is configured to enable fluid communication between the sensing element (100) and an environment external to the outer shield (108).

12. The method of Claim 11, further comprising disposing an inner shield (106) within the outer shield (108), wherein the inner shield (106) forms a plenum around the sensing end and allows fluid communication between the sampling tube (110) and the sensing end and between the sensing end and the outer shield (108).

13. The method of Claim 12, wherein the outer shield (108) has a plurality of holes (116) capable of allowing sensing gas in the space between the inner shield (106) and the outer shield (108) to exit the sensor (200).

14. The method of Claim 12, wherein the inner shield (106) has a length less than a length of the outer shield (108), wherein an opening is formed between the inner shield (106) and the outer shield (108).

15. The method of Claim 11, wherein the sampling tube (110) and the inner shield (106) are a single, integral part.

16. The method of Claim 11, wherein the sampling tube (110) has a diameter of about 2 mm to about 8 mm.

17. The method of Claim 16, wherein the sampling tube (110) has a diameter of about 4 mm to about 5 mm.

**18.** The method Claim 11, wherein the sampling tube (110) has a length of about 20 mm to about 150 mm.

**19.** The method of Claim 18, wherein the sampling tube (110) has a length of about 50 mm to about 100 mm.

**20.** A method of using a sensor (200), the method comprising:

exposing a sampling tube (110) disposed within a substrate to a gas to be sampled, wherein the sampling tube (110) extends from an outer shield (108) of a sensor (200) into a substrate (204), and wherein the outer shield (108) is located outside the substrate (204), and wherein the sensor (200) comprises an upper shell, an outer shield (108) disposed in physical communication with the upper shell (102), a sensing element (100) comprising a sensing electrode (12) and a reference electrode (14) disposed at a sensing end of the sensing element (100), wherein the sensing end is disposed in the outer shield (108), and the sampling tube (110) extends from the outer shield;
introducing the gas from the substrate (204) into the sampling tube (110);
passing the gas through the sampling tube (110); and
exposing the sensing end to the gas, wherein the gas contacts the sensing end and then exits the sensor (200) through the outer shield (108).

**21.** The method of Claim 20, further comprising flowing the gas through the sampling tube (110) into an inner shield (106) where the gas contacts the sensing end, and then out of the inner shield (106), through the outer shield (108), and out of the sensor (200), wherein the inner shield (106) disposed around the sensing end, between the sensing element (100) and the outer shield (108), and in fluid communication with the sampling tube (110).

**22.** An exhaust treatment device, comprising:

a substrate (204) disposed within a housing (206);
a sensor (200) extending through the housing (206), wherein the sensor (200) comprises an outer shield (108) disposed in physical communication with an upper shell (102), a sensing element (100) comprising an electrolyte (16), a sensing electrode (12), and a reference electrode (14) disposed at a sensing end of the sensing element (100), and wherein the sensing end is disposed in the outer shield (108), and a sampling tube (110) extending from the outer shield (108) into the substrate (204), wherein the sampling tube (110) is configured to enable fluid communication between the sensing element (100) and a point within the substrate (204).

**23.** The exhaust treatment device of Claim 22, wherein the substrate (204) is selected from the group consisting of filters, catalyst supports comprising catalyst, absorber supports comprising absorbent materials, and adsorber supports comprising adsorbant materials.

**24.** The exhaust treatment device of Claim 22, wherein the housing (206) further comprises an end portion comprising an end-cone (202), and wherein the sensor (200) extends into the housing through the end cone (202).

Fig.1.

Fig.2.

Fig.3.

Frequency response of sampling tubes
0.02" (0.5mm) wall

Fig.4.

Tube length (mm)

Natural Frequency (Hz)

RPM (8 cyl engine)

- - - - - 1/4 (6.35mm) OD
— — — 3/16 (4.7625mm) OD
— - - — 1/8 (3.175 mm) OD

8 cyl. engine
at 6000 RPM

4 cyl. engine
at 9000 RPM

401
402
403
404
405

EP 1 445 608 A1

13

Fig.5.

Internal Catalyst Oxygen Sensor

Fig.6.

EP 1 445 608 A1

**European Patent Office**

**EUROPEAN SEARCH REPORT**

Application Number

EP 04 07 5160

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | PATENT ABSTRACTS OF JAPAN vol. 013, no. 183 (M-820), 28 April 1989 (1989-04-28) -& JP 01 012018 A (TOYOTA MOTOR CORP), 17 January 1989 (1989-01-17) | 1,11,20, 22-24 | G01N27/407 F01N11/00 F02D41/14 G01N27/417 |
| Y | * abstract; figures 1-6 * --- | 22-24 | |
| X | EP 0 979 996 A (DENSO CORP) 16 February 2000 (2000-02-16) | 1,11,20 | |
| Y | * paragraphs [0019]-[0024]; figure 1 * --- | 22-24 | |
| X | EP 0 042 436 A (FUJI ELECTRIC CO LTD) 30 December 1981 (1981-12-30) * abstract; figures 1,11,12 * * page 3, line 27 - page 5, line 9 * * page 8, line 28 - page 9, line 30 * --- | 1,2,5, 10-12, 20,21 | |
| X | US 4 617 795 A (ABTHOFF JOERG ET AL) 21 October 1986 (1986-10-21) * column 3-4; claims 3,5,6; figure 1 * --- | 1,2, 5-12, 15-20 | TECHNICAL FIELDS SEARCHED (Int.Cl.7) G01N F02D F01N |
| X | US 4 875 990 A (KODACHI TORU ET AL) 24 October 1989 (1989-10-24) * column 1-4; figures 2,4 * --- | 1,11,20 | |
| X | DE 199 35 301 A (NGK SPARK PLUG CO ;HONDA MOTOR CO LTD (JP)) 24 February 2000 (2000-02-24) * abstract; figures 1-3 * * column 3, line 40 - column 4, line 59 * --- | 1,11,20 | |

-/--

The present search report has been drawn up for all claims

| Place of search | Date of completion of the search | Examiner |
|---|---|---|
| MUNICH | 7 May 2004 | Klein, M-0 |

**European Patent Office**

**EUROPEAN SEARCH REPORT**

Application Number

EP 04 07 5160

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | US 4 534 213 A (MIRIKIDANI TATSUMI) 13 August 1985 (1985-08-13) * column 2, line 34 - column 5, line 61; figures 1-8 *<br>--- | 1,11,20 | |
| A | US 4 756 885 A (RAFF LOTHAR ET AL) 12 July 1988 (1988-07-12) * column 1, line 1-22; figure 1 *<br>----- | 1 | |

TECHNICAL FIELDS SEARCHED (Int.Cl.7)

The present search report has been drawn up for all claims

| Place of search | Date of completion of the search | Examiner |
|---|---|---|
| MUNICH | 7 May 2004 | Klein, M-0 |

**EP 1 445 608 A1**

**ANNEX TO THE EUROPEAN SEARCH REPORT
ON EUROPEAN PATENT APPLICATION NO.**  EP 04 07 5160

This annex lists the patent family members relating to the patent documents cited in the above-mentioned European search report.
The members are as contained in the European Patent Office EDP file on
The European Patent Office is in no way liable for these particulars which are merely given for the purpose of information.

07-05-2004

| Patent document cited in search report | | | Publication date | Patent family member(s) | | Publication date |
|---|---|---|---|---|---|---|
| JP 01012018 | A | | 17-01-1989 | NONE | | |
| EP 0979996 | A | | 16-02-2000 | JP | 2000121599 A | 28-04-2000 |
| | | | | EP | 0979996 A2 | 16-02-2000 |
| | | | | US | 6319378 B1 | 20-11-2001 |
| EP 0042436 | A | | 30-12-1981 | JP | 56097742 U | 03-08-1981 |
| | | | | EP | 0042436 A1 | 30-12-1981 |
| | | | | WO | 8101882 A1 | 09-07-1981 |
| | | | | US | 4339318 A | 13-07-1982 |
| US 4617795 | A | | 21-10-1986 | DE | 3409045 C1 | 17-10-1985 |
| | | | | CH | 666724 A5 | 15-08-1988 |
| | | | | JP | 1793506 C | 14-10-1993 |
| | | | | JP | 4065339 B | 19-10-1992 |
| | | | | JP | 60210750 A | 23-10-1985 |
| US 4875990 | A | | 24-10-1989 | JP | 63058150 A | 12-03-1988 |
| | | | | JP | 63058151 A | 12-03-1988 |
| | | | | JP | 63058152 A | 12-03-1988 |
| | | | | JP | 1937525 C | 09-06-1995 |
| | | | | JP | 6064000 B | 22-08-1994 |
| | | | | JP | 63063960 A | 22-03-1988 |
| | | | | JP | 1929357 C | 12-05-1995 |
| | | | | JP | 6054305 B | 20-07-1994 |
| | | | | JP | 63063961 A | 22-03-1988 |
| | | | | JP | 1886157 C | 22-11-1994 |
| | | | | JP | 6007092 B | 26-01-1994 |
| | | | | JP | 63063934 A | 22-03-1988 |
| | | | | JP | 63063935 A | 22-03-1988 |
| | | | | JP | 63063936 A | 22-03-1988 |
| | | | | JP | 1924437 C | 25-04-1995 |
| | | | | JP | 6052253 B | 06-07-1994 |
| | | | | JP | 63063963 A | 22-03-1988 |
| | | | | DE | 3786127 D1 | 15-07-1993 |
| | | | | DE | 3786127 T2 | 02-12-1993 |
| | | | | EP | 0259093 A2 | 09-03-1988 |
| DE 19935301 | A | | 24-02-2000 | JP | 2000105215 A | 11-04-2000 |
| | | | | DE | 19935301 A1 | 24-02-2000 |
| US 4534213 | A | | 13-08-1985 | JP | 58106530 U | 20-07-1983 |
| US 4756885 | A | | 12-07-1988 | DE | 3511730 A1 | 06-02-1986 |
| | | | | DE | 8420216 U1 | 27-09-1984 |
| | | | | AT | 37958 T | 15-10-1988 |

EPO FORM P0459

For more details about this annex : see Official Journal of the European Patent Office, No. 12/82

18

**ANNEX TO THE EUROPEAN SEARCH REPORT
ON EUROPEAN PATENT APPLICATION NO.**                    EP 04 07 5160

This annex lists the patent family members relating to the patent documents cited in  the above-mentioned European search report.
The members are as contained in the European Patent Office EDP file on
The European Patent Office is in no way liable for these particulars which are merely  given for the purpose of information.

07-05-2004

| Patent document<br>cited in search report | Publication<br>date | Patent family<br>member(s) | | Publication<br>date |
|---|---|---|---|---|
| US 4756885        A | | AU<br>AU<br>DE<br>WO<br>EP<br>JP<br>JP | 586824 B2<br>4603885 A<br>3565606 D1<br>8600709 A1<br>0187785 A1<br>5015221 B<br>61502702 T | 27-07-1989<br>10-02-1986<br>17-11-1988<br>30-01-1986<br>23-07-1986<br>01-03-1993<br>20-11-1986 |

For more details about this annex : see Official Journal of the European Patent Office, No. 12/82